# EUROPEAN PATENT APPLICATION

(11) **EP 4 425 599 A1**
(43) Date of publication of application: **04.09.2024**
(21) Application number: 22886755.2
(22) Date of filing: 17.10.2022
(51) Int. Cl.: H01M 4/131, H01M 4/36, H01M 4/38, H01M 10/052, H01M 10/0587

(54) **NONAQUEOUS ELECTROLYTE SECONDARY BATTERY**

(30) Priority: 28.10.2021 JP 2021176119
(71) Applicant: Panasonic Energy Co., Ltd., Osaka 570-8511 (JP)
(72) Inventor: OHTA, Atsushi, Kadoma-shi, Osaka 571-0057 (JP)
(74) Representative: Eisenführ Speiser
(86) International application number: PCT/JP2022/038550
(87) International publication number: WO 2023/074427

(57) **Abstract**

With respect to a nonaqueous electrolyte secondary battery according to one embodiment of the present invention, a positive electrode comprises a mixture layer that contains first composite oxide particles, which are non-agglomerated particles having a volume-based median diameter of 2 µm to 20 µm, and second composite oxide particles, which are secondary particles each are composed of agglomerated primary particles having an average particle diameter of 50 nm to 5 µm. The mixture layer has: first regions which extend from both edges of the mixture layer in the width direction in a length that exceeds 10% of the total width of the mixture layer; and a second region that is sandwiched between the first regions. More second composite oxide particles are contained in the first regions than the first composite oxide particles. More first composite oxide particles are contained in the second region than the second composite oxide particles.

## Description

### TECHNICAL FIELD

The present disclosure relates to a non-aqueous electrolyte secondary battery, and more specifically relates to a non-aqueous electrolyte secondary battery comprising a wound electrode assembly.

### BACKGROUND ART

With spread of non-aqueous electrolyte secondary batteries for on-board use and power storage use, a non-aqueous electrolyte secondary battery having a large capacity and excellent cycle characteristics has been required in recent years. Since a positive electrode significantly affects battery characteristics including battery capacity and cycle characteristics, many investigations have been made on the positive electrode. For example, Patent Literatures 1 to 3 disclose a non-aqueous electrolyte secondary battery using a positive electrode containing, as a positive electrode active material: non-aggregated particles of a lithium-containing transition metal composite oxide; and secondary particles formed by aggregation of primary particles.

### CITATION LIST

### PATENT LITERATURE

PATENT LITERATURE 1: Japanese Unexamined Patent Application Publication No. Hei 07-037576
PATENT LITERATURE 2: Japanese Unexamined Patent Application Publication No. 2010-070427
PATENT LITERATURE 3: International Publication No. WO 2019/163483

### SUMMARY

To attempt to increase the capacity of the non-aqueous electrolyte secondary battery, a silicon material is used as a negative electrode active material in some cases. As a result of investigation by the present inventors, it has been found that, when the silicon material is used as the negative electrode active material in the non-aqueous electrolyte secondary battery comprising a wound electrode assembly, expansion and contraction of the silicone material with charge and discharge become particularly large in a part of the electrode assembly, which causes considerable deterioration of cycle characteristics.

It is an object of the present disclosure to improve the cycle characteristics of the non-aqueous electrolyte secondary battery using the silicon material as the negative electrode active material.

A non-aqueous electrolyte secondary battery according to the present disclosure comprises a wound electrode assembly having: a positive electrode containing a lithium-containing transition metal composite oxide as a positive electrode active material; a negative electrode containing a silicon material as a negative electrode active material; and a separator, the positive electrode and the negative electrode being wound with the separator interposed therebetween, wherein the positive electrode includes a mixture layer containing, as the lithium-containing transition metal composite oxide, first composite oxide particles that are non-aggregated particles having a median diameter on a volumetric basis of greater than or equal to 2 µm and less than or equal to 20 µm, and second composite oxide particles that are secondary particles formed by aggregation of primary particles having an average particle diameter of greater than or equal to 50 nm and less than or equal to 5 µm, the mixture layer has: first regions being regions with a length range of greater than 10% of an entire width of the mixture layer along a width direction of the positive electrode from both ends in a width direction of the mixture layer; and a second region sandwiched by the first regions, the first regions contain a larger amount of the second composite oxide particles than the first composite oxide particles, and the second region contains a larger amount of the first composite oxide particles than the second composite oxide particles.

The non-aqueous electrolyte secondary battery according to the present disclosure has excellent cycle characteristics. According to an aspect of the present disclosure, the cycle characteristics of the high-capacity non-aqueous electrolyte secondary battery using the silicon material as the negative electrode active material can be effectively improved.

### BRIEF DESCRIPTION OF DRAWINGS

FIG. 1 is a view schematically illustrating a cross section of a non-aqueous electrolyte secondary battery of an example of an embodiment.
FIG. 2 is a view schematically illustrating a cross section of an electrode assembly of an example of an embodiment.
FIG. 3 is a view schematically illustrating a positive electrode of an example of an embodiment.

### DESCRIPTION OF EMBODIMENTS

As noted above, use of the silicon material as the negative electrode active material in order to attempt to increase the capacity of the non-aqueous electrolyte secondary battery considerably decreases the capacity with charge and discharge, and it is not easy to achieve good cycle characteristics. As a result of investigation by the present inventors, it has been found that, in a non-aqueous electrolyte secondary battery comprising a wound electrode assembly, balance between deterioration rates of the positive electrode and the negative electrode changes by repeated charge and discharge to cause a difference in discharge depth between ends and center in a width direction of the negative electrode. It is considered that this phenomenon is caused by unevenness of resistance distribution of the negative electrode in the width direction of the electrode with charge and discharge.

In particular, it is estimated that, under charge-discharge conditions hardly deteriorating the positive electrode such as a low upper-limit charge voltage, the discharge depth in the ends in the width direction of the negative electrode easily becomes deep compared with the center in the width direction to increase expansion and contraction of the silicon material in the ends in the width direction of the negative electrode. In this case, it is considered that a protective coating (SEI coating) formed on surfaces of particles of the negative electrode active material breaks to accelerate side reactions of an electrolyte, and consequently causes drastic deterioration of the capacity. That is, the deterioration is more likely to occur in the ends in the width direction of the negative electrode than in the center in the width direction. Accordingly, the present inventors have arrived at a novel concept that ends in a width direction of the positive electrode, which are opposite to the ends in the width direction of the negative electrode, are set to have constitution to be more easily deteriorated than the center in the width direction in order to inhibit the drastic deterioration of the capacity to improve the cycle characteristics, which regulates the balance of the above deterioration rates of the positive electrode and the negative electrode.

To realize this concept, the present inventors have focused on a difference in a degree of deterioration between non-aggregated particles and secondary particles (aggregated particles) of a lithium-containing transition metal composite oxide, and have used a mixture of the non-aggregated particles and the secondary particles as a positive electrode active material. Note that the secondary particles easily cause particle breakage with charge and discharge compared with the non-aggregated particles.

Specifically, set is positive electrode structure in which a first region of a predetermined length range from both ends in a width direction of a positive electrode mixture layer contains a large number of the secondary particles and in which a second region of a center in the width direction of the positive electrode mixture layer contains a large number of the non-aggregated particles. According to this, it is considered that the first region of the positive electrode mixture layer is more easily deteriorated than the second region to favorably regulate the balance of the deterioration rates of the positive electrode and the negative electrode, which inhibits deep discharge of the negative electrode in the ends in the width direction. As a result, the drastic decrease in the capacity with the charge and discharge of the battery is inhibited and therefore the cycle characteristics is effectively improved.

Hereinafter, an example of an embodiment of the non-aqueous electrolyte secondary battery according to the present disclosure will be described in detail with reference to the drawings. Note that, the present disclosure includes selectively combining a plurality of embodiments and modified examples described below.

Hereinafter, a cylindrical battery in which a wound electrode assembly 14 is housed in a bottomed cylindrical exterior housing can 16 will be exemplified, but the exterior of the battery is not limited to a cylindrical exterior housing can, and may be, for example, a rectangular exterior housing can (rectangular battery) or an exterior composed of laminated sheets including a metal layer and a resin layer (laminated battery).

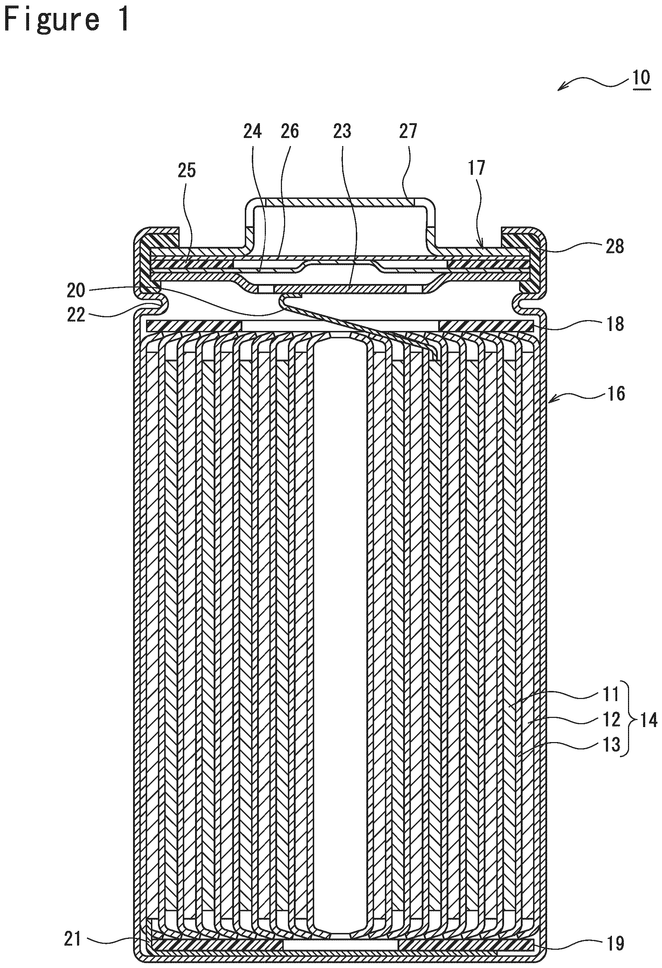

FIG. 1 is a view schematically illustrating a cross section of a non-aqueous electrolyte secondary battery 10 of an example of an embodiment. As illustrated in FIG. 1, the non-aqueous electrolyte secondary battery 10 comprises the wound electrode assembly 14, a non-aqueous electrolyte, and the exterior housing can 16 housing the electrode assembly 14 and the non-aqueous electrolyte. The electrode assembly 14 has a positive electrode 11, a negative electrode 12, and a separator 13, and has a wound structure in which the positive electrode 11 and the negative electrode 12 are spirally wound with the separator 13 interposed therebetween. The exterior housing can 16 is a bottomed cylindrical metallic container having an opening on one side in an axial direction, and the opening of the exterior housing can 16 is sealed with a sealing assembly 17. Hereinafter, for convenience of description, the sealing assembly 17 side of the battery will be described as the upper side, and the bottom side of the exterior housing can 16 will be described as the lower side.

The non-aqueous electrolyte includes a non-aqueous solvent and an electrolyte salt dissolved in the non-aqueous solvent. For the non-aqueous solvent, esters, ethers, nitriles, amides, a mixed solvent of two or more thereof, and the like are used, for example. The non-aqueous solvent may contain a halogen-substituted derivative in which hydrogen atoms of these solvents are at least partially replaced with a halogen atom such as fluorine. An example of the non-aqueous solvent is ethylene carbonate (EC), ethyl methyl carbonate (EMC), dimethyl carbonate (DMC), or a mixed solvent thereof. For the electrolyte salt, a lithium salt such as LiPF₆ is used, for example. The non-aqueous electrolyte is not limited to a liquid electrolyte but may be a solid electrolyte.

The positive electrode 11, the negative electrode 12, and the separator 13, which constitute the electrode assembly 14, are all a band-shaped elongated body, and spirally wound to be alternately stacked in a radial direction of the electrode assembly 14. To prevent precipitation of lithium, the negative electrode 12 is formed to be one size larger than the positive electrode 11. That is, the negative electrode 12 is formed to be longer than the positive electrode 11 in a longitudinal direction and a width direction (short direction). Two separators 13 are formed to be one size larger than at least the positive electrode 11, and disposed to sandwich the positive electrode 11. The electrode assembly 14 has a positive electrode lead 20 connected to the positive electrode 11 by welding or the like and a negative electrode lead 21 connected to the negative electrode 12 by welding or the like.

Insulating plates 18 and 19 are disposed on the upper and lower sides of the electrode assembly 14, respectively. In the example illustrated in FIG. 1, the positive electrode lead 20 extends through a through hole of the insulating plate 18 toward the sealing assembly 17 side, and the negative electrode lead 21 extends through an outside of the insulating plate 19 toward the bottom side of the exterior housing can 16. The positive electrode lead 20 is connected to a lower surface of an internal terminal plate 23 of the sealing assembly 17 by welding or the like, and a cap 27, which is a top plate of the sealing assembly 17 electrically connected to the internal terminal plate 23, becomes a positive electrode terminal. The negative electrode lead 21 is connected to a bottom inner surface of the exterior housing can 16 by welding or the like, and the exterior housing can 16 becomes a negative electrode terminal.

The exterior housing can 16 is a bottomed cylindrical metallic container having an opening on one side in an axial direction, as noted above. A gasket 28 is provided between the exterior housing can 16 and the sealing assembly 17, thereby sealability inside the battery and insulation between the exterior housing can 16 and the sealing assembly 17 are ensured. On the exterior housing can 16, a grooved portion 22 in which a part of a side wall thereof projects inward to support the sealing assembly 17 is formed. The grooved portion 22 is preferably formed in a circular shape along a circumferential direction of the exterior housing can 16, and supports the sealing assembly 17 with the upper face thereof. The sealing assembly 17 is fixed on the upper part of the exterior housing can 16 with the grooved portion 22 and with an end part of the opening of the exterior housing can 16 caulked to the sealing assembly 17.

The sealing assembly 17 has a stacked structure of the internal terminal plate 23, a lower vent member 24, an insulating member 25, an upper vent member 26, and the cap 27 in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected at each of central parts thereof, and the insulating member 25 is interposed between each of the circumferential parts. If the internal pressure increases due to battery abnormality, the lower vent member 24 is deformed so as to push the upper vent member 26 up toward the cap 27 side and breaks, and thereby a current pathway between the lower vent member 24 and the upper vent member 26 is cut off. If the internal pressure further increases, the upper vent member 26 breaks, and gas is discharged through an opening of the cap 27.

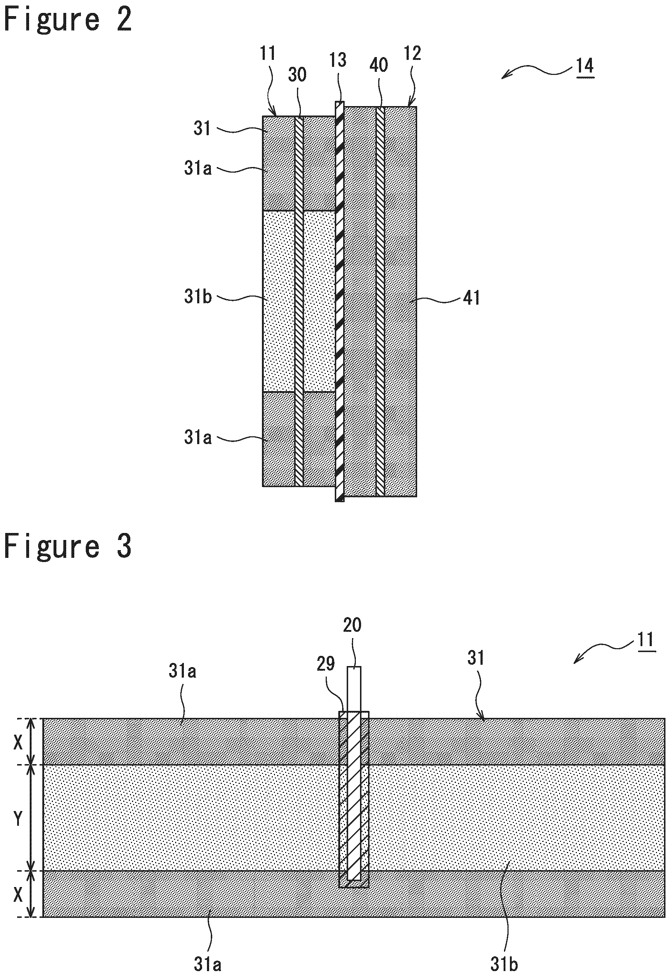

Hereinafter, the positive electrode 11, the negative electrode 12, and the separator 13 will be described in detail with reference to FIG. 2 and FIG. 3. FIG. 2 is a sectional view of the electrode assembly 14, and illustrates each one of the positive electrode 11, the negative electrode 12, and the separator 13. FIG. 3 is a front view of the positive electrode 11. In FIG. 3, an insulative tape 29 is indicated by slanted-line hatching, and a positive electrode mixture layer 31 is indicated by dot hatching.

### [Positive Electrode]

As illustrated in FIG. 2 and FIG. 3, the positive electrode 11 comprises a positive electrode core 30 and a positive electrode mixture layer 31 formed on a surface of the positive electrode core 30. For the positive electrode core 30, a foil of a metal stable within a potential range of the positive electrode 11, such as aluminum and an aluminum alloy, a film in which such a metal is disposed on a surface layer thereof, and the like may be used. An example of the positive electrode core 30 is a foil of aluminum or an aluminum alloy having a thickness of greater than or equal to 10 µm and less than or equal to 20 µm. The positive electrode mixture layer 31 includes a positive electrode active material, a conductive agent, and a binder, and preferably formed on both surfaces of the positive electrode core 30. On a center in a length direction of the positive electrode 11, an exposed portion where a surface of the positive electrode core 30 is exposed is provided, and the positive electrode lead 20 is connected to the exposed portion. The insulative tape 29 covering the positive electrode lead 20 adheres to the positive electrode 11.

Examples of the conductive agent included in the positive electrode mixture layer 31 include a carbon material such as carbon black, acetylene black, Ketjenblack, graphite, carbon nanotube, carbon nanofiber, and graphene. A content of the conductive agent is, for example, greater than or equal to 0.01 part by mass and less than or equal to 10 parts by mass, and preferably greater than or equal to 0.05 parts by mass and less than or equal to 5 parts by mass per 100 parts by mass of the positive electrode active material.

Examples of the binder included in the positive electrode mixture layer 31 include a fluorine-containing resin such as polytetrafluoroethylene (PTFE) and polyvinylidene fluoride (PVdF), polyacrylonitrile (PAN), a polyimide, an acrylic resin, and a polyolefin. With these resins, carboxymethylcellulose (CMC) or a salt thereof, polyethylene oxide (PEO), and the like may be used in combination. A content of the binder is, for example, greater than or equal to 0.1 part by mass and less than or equal to 10 parts by mass, and preferably greater than or equal to 0.5 parts by mass and less than or equal to 5 parts by mass per 100 parts by mass of the positive electrode active material.

The positive electrode mixture layer 31 includes a particulate lithium-containing transition metal composite oxide as the positive electrode active material. The lithium-containing transition metal composite oxide is a composite oxide containing Co, Mn, Ni, Al, and the like in addition to Li. The metal element constituting the lithium-containing transition metal composite oxide is at least one selected from the group consisting of Mg, Al, Ca, Sc, Ti, V, Cr, Mn, Fe, Co, Ni, Cu, Zn, Ga, Ge, Y, Zr, Sn, Sb, W, Pb, and Bi, for example. Among them, at least one selected from the group consisting of Co, Ni, and Mn is preferably contained. An example of preferable composite oxides is a composite oxide containing Ni, Co, and Mn, and a composite oxide containing Ni, Co, and Al.

The positive electrode mixture layer 31 contains two types of the lithium-containing transition metal composite oxide particles having particle shapes different from each other as the positive electrode active material. The positive electrode mixture layer 31 includes first regions 31a formed on both sides in the width direction and a second region 31b sandwiched by the two first regions 31a. The first regions 31a and the second region 31b contain any one of the two types of the lithium-containing transition metal composite oxide particles, or contain the two types of the composite oxide particles and mixing ratios thereof are different in each region. Although the positive electrode mixture layer 31 may include a third region within a range not impairing the object of the present disclosure, the positive electrode mixture layer 31 is preferably composed of the two first regions 31a and the one second region 31b.

The positive electrode mixture layer 31 contains, as the two types of the lithium-containing transition metal composite oxide particles: first lithium-containing transition metal composite oxide particles (first composite oxide particles) being non-aggregated particles having a median diameter (hereinafter, which may be referred to as "D50") on a volumetric basis of greater than or equal to 2 µm and less than or equal to 20 µm; and second lithium-containing transition metal composite oxide particles (second composite oxide particles) being secondary particles formed by aggregation of primary particles having an average particle diameter of greater than or equal to 50 nm and less than or equal to 5 µm. Although details will be described later, using the non-aggregated particles and the secondary particles in combination and appropriately regulating arrangement of each of the particles in the positive electrode mixture layer 31 inhibit the drastic deterioration of the capacity and therefore the cycle characteristics can be effectively improved.

In the positive electrode mixture layer 31, formed are the first regions 31a containing a larger amount of the second composite oxide particles than the first composite oxide particles in a length range of greater than 10% of an entire width of the positive electrode mixture layer 31 along a width direction of the positive electrode 11 from both ends in a width direction of the mixture layer. The second region 3 1b of the positive electrode mixture layer 31, which is a region other than the first regions 31a, contains a larger amount of the first composite oxide particles than the second composite oxide particles. In the positive electrode mixture layer 31, the two first regions 31a and the one second region 31b sandwiched by the first regions 31a are formed as stripes in a front view of the positive electrode 11.

The first regions 31a and the second region 31b are formed with, for example, a substantially constant width along the length direction of the positive electrode 11. In FIG. 3, a width of each of the first regions 31a along the width direction of the positive electrode 11 is represented by X, and a width of the second region 31b is represented by Y. The widths X of the two first regions 31a may be different from each other, but preferably substantially equal. Setting the widths X of the two first regions 31a to be approximately equal allows the discharge depth on both the ends in the width direction of the negative electrode 12 opposite to each of the first regions 31a to be substantially equal across the separator 13, which more remarkably yields the effect of improving the cycle characteristics.

The width X of each of the first regions 31a is necessarily larger than 10% of the entire width of the positive electrode mixture layer 31. If the width X of the first region 31a containing a large amount of the secondary particles is less than or equal to 10%, the balance of deterioration between the positive electrode 11 and the negative electrode 12 fails to be regulated to increase the discharge depth in the ends in the width direction of the negative electrode 12 opposite to the first region 31a across the separator 13 to promote the deterioration, and the good cycle characteristics cannot be obtained. The width X of each of the first regions 3 1a is preferably greater than or equal to 15%, and more preferably greater than or equal to 20% relative to the entire width of the positive electrode mixture layer 31.

An upper limit of the width X of each of the first regions 31a is preferably 40% of the entire width of the positive electrode mixture layer 31. If the width X of each of the first regions 31a is more than 40%, the cycle characteristics tend to be deteriorated compared with the case of less than or equal to 40%. An example of preferable ranges of the width X of each of the first regions 31a is greater than or equal to 15% and less than or equal to 40%, or greater than or equal to 20% and less than or equal to 40%. That is, an example of preferable ranges of the width Y of the second region 3 1b is greater than or equal to 20% and less than or equal to 70%, or greater than or equal to 20% and less than or equal to 60%. A thickness of the positive electrode mixture layer 31 is, for example, greater than or equal to 50 µm and less than or equal to 150 µm on one side of the positive electrode core 30. Thicknesses of the first regions 31a and the second region 31b are substantially equal, for example.

The positive electrode mixture layer 31 may contain only the first and second composite oxide particles as the positive electrode active material, or may contain third lithium-containing transition metal composite oxide particles within a range not impairing the object of the present disclosure. An example of the third lithium-containing transition metal composite oxide particles is composite oxide particles not satisfying a particle diameter condition, described later. A content of the positive electrode active material is, for example, greater than or equal to 90 mass% based on the mass of the positive electrode mixture layer, and the contents in the first regions 31a and in the second region 31b are substantially equal.

In the positive electrode mixture layer 31, types and contents of the conducive agent and the binder may be same as or different from each other in the first region 31a and in the second region 31b. In the present embodiment, the same type of the conductive agent is used in the first region 31a and in the second region 31b, and the contents of the conductive agent are substantially equal. In addition, the same type of the binder is used in the first region 31a and in the second region 31b, and the contents of the binder are substantially equal.

D50 of the first composite oxide particles is greater than or equal to 2 µm and less than or equal to 20 µm, preferably greater than or equal to 2 µm and less than or equal to 10 µm, and more preferably greater than or equal to 3 µm and less than or equal to 8 µm. D50 of the second composite oxide particles is preferably greater than or equal to 10 µm and less than or equal to 30 µm, and more preferably greater than or equal to 10 µm and less than or equal to 20 µm. The D50 means a particle diameter at which a cumulative frequency is 50% from a smaller particle diameter side in a particle size distribution on a volumetric basis. The particle size distributions of the composite oxide particles may be measured by using a laser diffraction-type particle size distribution measuring device (for example, MT3000II, manufactured by MicrotracBEL Corp.) with water as a dispersion medium.

The first composite oxide particles are particles having no particle boundary inside the particles, and are primary particles of single crystals, for example. The crystallinity of the composite oxide particles can be determined by using a scanning ion microscope. The first composite oxide particle being non-aggregated particle may include less than or equal to five primary particles. The non-aggregated particle herein means a particle composed of one primary particle having no particle boundary inside the particle, and a particle composed of less than or equal to five primary particles.

The second composite oxide particles are secondary particles formed by aggregation of many primary particles having an average particle diameter of greater than or equal to 50 nm and less than or equal to 5 µm, preferably greater than or equal to 500 nm and less than or equal to 2 µm. In the second composite oxide particles, many particle boundaries of the primary particles are present. The primary particle may be determined by observing the second composite oxide particles with a scanning electron microscope (SEM). A plurality of primary particles adheres to each other with strength not to disintegrate even when a strong force is applied such as crushing the second composite oxide particles after the synthesis or preparing a positive electrode mixture slurry.

The average particle diameter of the primary particles constituting the second composite oxide particles may be determined by analyzing an SEM image of cross sections of the particles. For example, the positive electrode 11 is embedded into a resin, the cross section is produced by cross-section polisher (CP) processing, and this cross section is imaged with the SEM. From the SEM image, 30 primary particles are randomly selected to observe the particle boundary, a diameter of a circumscribed circle of each of the 30 primary particles is determined, and an average value thereof is specified as the average particle diameter.

Each of the composite oxide particles may be synthesized by the method described in Examples, described later. The first composite oxide particles that are non-aggregated particles may be synthesized by, for example, calcining a precursor (metal composite hydroxide) including Ni, Co, Mn, Al, and the like, then water-washing, dehydrating, and drying the calcined product, and performing a crushing treatment. The second composite oxide particles that are secondary particles may be synthesized by, for example, not performing the crushing treatment of the calcined product used for synthesizing the first composite oxide particles.

Alternatively, the first composite oxide particles may also be synthesized by raising a pH of an alkaline aqueous solution used for synthesizing the precursor compared with a case of synthesizing the second composite oxide particles. The first composite oxide particles may also be synthesized by raising a calcination temperature of the precursor instead of or in addition to raising the pH of the alkaline aqueous solution. An example of a preferable pH of the alkaline aqueous solution for synthesizing the first composite oxide particles is greater than or equal to 10 and less than or equal to 11, and an example of a preferable calcination temperature is greater than or equal to 950°C and less than or equal to 1100°C. For synthesizing the second composite oxide particles, an alkaline aqueous solution having a pH of greater than or equal to 9 and less than or equal to 10 is used, and the calcination temperature is set to less than or equal to 950°C, for example.

Each of the composite oxide particles is composed of, for example, a composite oxide having a hexagonal crystal structure belonging to the space group R-3m, and preferably composed of LiNiₓCo_{y}Mn_{z}O₂ (0.3<x<0.6, x+y+z=1) or LiNiₓCo_{y}Al_{z}O₂ (0.8<x<0.95, x+y+z=1) as a main component. Here, the main component means a component with the highest mass proportion among the components constituting the composite oxide particles. The composition of each of the composite oxide particles may be same as or different from each other.

A content of the second composite oxide particles in the first region 31a is preferably greater than or equal to 80 mass%, or may be substantially 100 mass% of a mass of the positive electrode active material contained in the first region 31a. A preferable mass ratio between the first composite oxide particles and the second composite oxide particles in the first region 31a is from 20:80 to 0:100 . That is, the first region 31a may contain the first composite oxide particles as the positive electrode active material, but a content thereof is preferably less than or equal to 20 mass% based on the mass of the positive electrode active material contained in the first region 31a. When the mass ratio of the composite oxide particles is within this range, deep discharge in the ends in the width direction of the negative electrode 12 is inhibited to make the effect of improving the cycle characteristics more remarkable.

Although the second region 31b contains the second composite oxide particles as the positive electrode active material, a content thereof is smaller than a content of the first composite oxide particles. The content of the first composite oxide particles in the second region 3 1b is, for example, greater than or equal to 80 mass%, or may be substantially 100 mass% of the mass of the positive electrode active material contained in the second region 31b. A preferable mass ratio between the first composite oxide particles and the second composite oxide particles in the second region 31b is from 80:20 to 100:0. Adding a large amount of the first composite oxide particles to the second region 31b can increase durability as an entirety of the positive electrode 11, making the effect of improving the cycle characteristics more remarkable.

The positive electrode 11 may be produced by applying a positive electrode mixture slurry including the positive electrode active material, the conductive agent, the binder, and the like on the positive electrode core 30, and drying and then compressing the coating to form the positive electrode mixture layers 31 on both the surfaces of the positive electrode core 30. For the positive electrode mixture slurry, two types of slurries with different types of the positive electrode active material are used. For example, a first positive electrode mixture slurry containing only the first composite oxide particles as the positive electrode active material is applied on the center in the width direction of the positive electrode core 30, and a second positive electrode mixture slurry containing only the second composite oxide particles as the positive electrode active material is applied on a region on the side of both the ends in the width direction of the positive electrode core 30. In this time, the amount of each of the slurries applied is regulated so that the widths of the first regions 31a and the second region 31b, X and Y, are within the above ranges.

### [Negative Electrode]

As illustrated in FIG. 2, the negative electrode 12 comprises a negative electrode core 40 and a negative electrode mixture layer 41 formed on a surface of the negative electrode core 40. For the negative electrode core 40, a foil of a metal stable within a potential range of the negative electrode 12, such as copper and a copper alloy, a film in which such a metal is disposed on a surface layer thereof, and the like may be used. An example of the negative electrode core 40 is a foil of copper or a copper alloy having a thickness of greater than or equal to 5 µm and less than or equal to 15 µm. The negative electrode mixture layer 41 includes a negative electrode active material and a binder, and is preferably formed on both surfaces of the negative electrode core 40. A thickness of the negative electrode mixture layer 41 is, for example, greater than or equal to 30 µm and less than or equal to 150 µm on one side of the negative electrode core 40. The negative electrode 12 may be produced by applying a negative electrode mixture slurry including the negative electrode active material, the binder, and the like on the negative electrode core 40, and drying and compressing the coating to form the negative electrode mixture layers 41 on both the surfaces of the negative electrode core 40.

For the binder included in the negative electrode mixture layer 41, a fluorine-containing resin such as PTFE and PVdF, PAN, a polyimide, an acrylic resin, a polyolefin, styrene-butadiene rubber (SBR), or the like may be used. The negative electrode mixture layer 41 may include CMC or a salt thereof, polyacrylic acid (PAA) or a salt thereof, polyvinyl alcohol (PVA), and the like. A content of the binder is, for example, greater than or equal to 0.1 mass% and less than or equal to 10 mass%, and preferably greater than or equal to 0.5 mass% and less than or equal to 5 mass% based on the mass of the negative electrode active material. To the negative electrode mixture layer 41, a conductive agent such as carbon black, acetylene black, Ketjenblack, and carbon nanotube may be added.

The negative electrode mixture layer 41 includes a silicon material as the negative electrode active material. Use of the silicon material may attempt to increase the capacity of the battery. Meanwhile, use of the silicon material is likely to deteriorate the cycle characteristics of the battery, but the constitution of the positive electrode mixture layer 31 is devised as above to keep the good cycle characteristics in the present embodiment. Although use of only the silicon material as the negative electrode active material is acceptable, a carbon-based active material is preferably used in combination from the viewpoints of the cycle characteristics and the like. For the carbon-based active material, natural graphite such as flake graphite, artificial graphite such as massive artificial graphite and graphitized mesophase-carbon microbeads, and the like are used, for example.

A content of the silicon material is preferably greater than or equal to 1 mass%, more preferably greater than or equal to 3 mass%, and particularly preferably greater than or equal to 5 mass% based on the mass of the negative electrode active material. An example of an upper limit of the content of the silicon material is 30 mass%, and preferably 25 mass%. A preferable example of the content of the silicon material is greater than or equal to 1 mass% and less than or equal to 30 mass%, and more preferably greater than or equal to 3 mass% and less than or equal to 25 mass% or greater than or equal to 5 mass% and less than or equal to 20 mass% based on the mass of the negative electrode active material.

An example of the silicon material includes: a silicon material containing a silicon oxide phase and Si dispersed in the silicon oxide phase (hereinafter, referred to as "first silicon material"); and a silicon material containing a lithium silicate phase and Si dispersed in the lithium silicate phase (hereinafter, referred to as "second silicon material"). D50 of the silicon material is, for example, greater than or equal to 1 µm and less than or equal to 15 µm, which is typically smaller than D50 of graphite. On particle surfaces of the silicon material, a conductive layer composed of a highly conductive material may be formed. An example of preferable conductive layers is a carbon coating composed of a carbon material.

The first silicon material has a particle structure in which fine Si particles are dispersed in the silicon oxide phase. A preferable first silicon material has a sea-island structure in which the fine Si particles are substantially uniformly dispersed in an amorphous silicon oxide matrix, and is represented by the general formula SiOₓ (0<x≤2). The silicon oxide phase is composed of aggregation of particles finer than the Si particles. A content of the Si particles is preferably greater than or equal to 35 mass% and less than or equal to 75 mass% based on a total mass of the silicon material from the viewpoints of achievement of both the battery capacity and the cycle characteristics, and the like.

An average particle diameter of the Si particles dispersed in the silicon oxide phase is, for example, less than or equal to 500 nm, and preferably less than or equal to 200 nm or less than or equal to 50 nm before charge and discharge. After charge and discharge, the average particle diameter is less than or equal to 400 nm or less than or equal to 100 nm, for example. The average particle diameter of the Si particles is determined by observing a particle cross section of the first silicon material using a SEM or a transmission electron microscope (TEM) to determine the average particle diameter as an average value of the longest diameters of 100 Si particles.

The second silicon material has a particle structure in which fine Si particles are dispersed in the lithium silicate phase. A preferable second silicon material has a sea-island structure in which the fine Si particles are substantially uniformly dispersed in a lithium silicate matrix. The lithium silicate phase is composed of aggregation of particles finer than the Si particles. A content of the Si particles is preferably greater than or equal to 35 mass% and less than or equal to 75 mass% based on a total mass of the second silicon material similarly to the case of the first silicon material. An average particle diameter of the Si particles is, for example, less than or equal to 500 nm, and preferably less than or equal to 200 nm or less than or equal to 50 nm before charge and discharge.

The lithium silicate phase is preferably composed of a compound represented by the general formula Li_{2z}SiO_{(2+z)} (0<z<2). That is, the lithium silicate phase excludes Li₄SiO₄ (Z=2). Li₄SiO₄, which is an unstable compound, reacts with water and exhibits alkalinity, and therefore may modify Si, resulting in decrease of the charge-discharge capacity. The lithium silicate phase preferably contains Li₂SiO₃ (Z=1) or Li₂Si₂O₅ (Z=1/2) as a main component from the viewpoints of stability, production easiness, lithium-ion conductivity, and the like. When Li₂SiO₃ or Li₂Si₂O₅ is a main component, a content of the main component is preferably greater than 50 mass%, and more preferably greater than or equal to 80 mass% based on a total mass of the lithium silicate phase.

### [Separator]

For the separator 13, a porous sheet having an ion permeation property and an insulation property is used. Specific examples of the porous sheet include a fine porous thin film, a woven fabric, and a nonwoven fabric. As a material for the separator, a polyolefin such as polyethylene and polypropylene, cellulose, and the like are preferable. The separator 13 may have a single layer structure or a multilayer structure. On a surface of the separator 13, a highly heat-resistant resin layer such as an aramid resin may be formed.

On an interface between the separator 13 and at least one of the positive electrode 11 and the negative electrode 12, a filler layer including an inorganic substance filler may be formed. Examples of the inorganic substance filler include an oxide or phosphate compound containing metal such as Ti, Al, Si, and Mg. The filler layer may be formed by applying a slurry containing the filler on a surface of the positive electrode 11, the negative electrode 12, or the separator 13.

### EXAMPLES

Hereinafter, the present disclosure will be further described in detail with Examples, but the present disclosure is not limited to these Examples.

### <Example 1>

### [Synthesis of Non-Aggregated Particles (First Composite Oxide Particle)]

Nickel sulfate, cobalt sulfate, and aluminum sulfate were mixed at a predetermined ratio, and uniformly mixed in an alkaline aqueous solution having a pH of greater than or equal to 10 and less than or equal to 11 to synthesize a precursor. Then, this precursor and lithium hydroxide were mixed, the mixture was calcined at a temperature of 1000°C for greater than or equal to 10 hours, and then the calcined product was crushed to obtain composite oxide particles. The composition and the particle diameter of the particles were as follows.
Composition: LiNi_{0.91}Co_{0.04}Al_{0.05}O₂
D50: 4.0 µm

### [Synthesis of Secondary Particles (Second Composite Oxide Particles)]

Second composite oxide particles that are secondary particles formed by aggregation of many primary particles were obtained in the same manner as of the synthesis of the non-aggregated particles except that: the pH of the alkaline aqueous solution was changed to greater than or equal to 9 and less than or equal to 10; and the calcination temperature was changed to 900°C. The composition and the particle diameter of the particles were as follows.
Composition: LiNi_{0.91}Co_{0.04}Al_{0.05}O₂
D50: 12.0 µm

### [Production of Positive Electrode]

The first composite oxide being the non-aggregated particles, acetylene black, and polyvinylidene fluoride (PVdF) were mixed at a mass ratio of 100:1:0.9, and N-methylpyrrolidone (NMP) was used as a dispersion medium to prepare a first positive electrode mixture slurry. In addition, a second positive electrode mixture slurry was prepared in the same manner by using the second composite oxide being the secondary particles. Then, the positive electrode mixture slurries were applied on both surfaces of the positive electrode core composed of an aluminum foil with 15 µm in thickness to form a positive electrode mixture layer. In this time, the second positive electrode mixture slurry was applied on first regions being regions with a length range of 20% of an entire width of the positive electrode core from both ends in a width direction of the positive electrode core, and the first positive electrode mixture slurry was applied on a second region being a region sandwiched by the first regions.

When the entire width of the positive electrode core was 1, the width X of each of the first regions was 0.2, and the width Y of the second region was 0.6. The positive electrode core in which the coatings of each of the mixture slurries were formed was subjected to a thermal treatment at a temperature of greater than or equal to 100°C and less than or equal to 150°C to remove NMP, and then the coating was compressed with a roll-pressing machine, and cut to a predetermined electrode size (width: 62.8 mm, length: 861 mm) to produce a positive electrode in which the positive electrode mixture layers were formed on both the surfaces of the positive electrode core. A thickness of the positive electrode was 0.144 mm.

### [Production of Negative Electrode]

As a negative electrode active material, a mixture of 80 parts by mass of graphite powder and 20 parts by mass of a silicon material represented by SiOₓ was used. The negative electrode active material, carboxymethylcellulose (CMC), and a dispersion of styrene-butadiene rubber (SBR) were mixed at a solid-content mass ratio of 100:1:1, and water was used as a dispersion medium to prepare a negative electrode mixture slurry. This negative electrode mixture slurry was applied on both surfaces of a negative electrode core composed of a copper foil with 8 µm in thickness, the coating was dried and compressed, and then cut to a predetermined electrode size (width: 64.2 mm, length: 959 mm) to produce a negative electrode in which negative electrode mixture layers were formed on both the surfaces of the negative electrode core. A thickness of the negative electrode was 0.160 mm.

### [Preparation of Non-Aqueous Electrolyte Liquid]

Into a mixed solvent in which fluoroethylene carbonate (FEC) and dimethyl carbonate (DMC) were mixed at a volume ratio (25°C) of 1:3, LiPF₆ was dissolved so that the concentration was 1.5 mol/L to prepare a non-aqueous electrolyte liquid.

### [Production of Battery]

A positive electrode lead made of aluminum was attached to the positive electrode core, a negative electrode lead made of nickel/copper/nickel was attached to the negative electrode core, and the positive electrode and the negative electrode were spirally wound with a separator made of polyethylene interposed therebetween to produce a wound electrode assembly. On the outermost peripheral surface of the electrode assembly, a negative electrode core exposed portion where the negative electrode mixture layer was absent was provided. In a state where insulative plates were disposed on upper and lower sides of the electrode assembly, the electrode assembly was housed in a bottomed cylindrical exterior housing can, the negative electrode lead was welded to a bottom inner face of the exterior housing can, and the positive electrode lead was welded to an internal terminal plate of a sealing assembly. Thereafter, the non-aqueous electrolyte was injected into the exterior housing can by a pressure-reducing method, and an opening edge of the exterior housing can was caulked and fixed with the sealing assembly to produce a non-aqueous electrolyte secondary battery A1 having a battery capacity of 4600 mAh.

### <Example 2>

A positive electrode and a non-aqueous electrolyte secondary battery A2 were produced in the same manner as in Example 1 except that, in the production of the positive electrode, each of the positive electrode mixture slurries was applied so that the width X of each of the first regions was 0.4 and the width Y of the second region was 0.2.

### <Comparative Example 1>

A positive electrode and a non-aqueous electrolyte secondary battery B 1 were produced in the same manner as in Example 1 except that, in the production of the positive electrode, each of the positive electrode mixture slurries was applied so that the width X of each of the first regions was 0.1 and the width Y of the second region was 0.8.

### <Comparative Example 2>

A positive electrode and a non-aqueous electrolyte secondary battery B2 were produced in the same manner as in Example 1 except that, in the production of the positive electrode, the first positive electrode mixture slurry was applied on each of the first regions, and the second positive electrode mixture slurry was applied on the second region.

Each of the batteries of Examples and Comparative Examples was subjected to a cycle test by the following method. Table 1 shows the evaluation results.

### [Cycle Test]

Under a temperature condition of 25°C, each of the produced batteries was charged at a constant current of 0.3 C until a battery voltage reached 4.1 V, and then charged at a constant voltage of 4.1 V until a current reached 0.02 C. Thereafter, the battery was discharged at a constant current of 0.2 C until the battery voltage reached 2.5 V. An interval time between the charge and the discharge was 20 minutes, and this charge-discharge cycle was performed with 500 cycles to determine a capacity retention with the following formula. Capacity Retention (%) = (Discharge capacity at 500th cycle / Discharge capacity at 1st cycle) × 100

A case where an amount of change in the retention in each cycle was greater than or equal to 0.1% was judged as drastic deterioration, and the number of cycles at this time was determined.

**[Table 1]**

| | Ratio of length to entire width of mixture layer | | Positive electrode active material | | Cycle test | |
|---|---|---|---|---|---|---|
| | First region | Second region | First region | Second region | Occurrence of drastic deterioration | 500 eye capacity retention |
| A1 | 0.2 | 0.6 | Secondary particles | Non-aggregated particles | None | 80% |
| A2 | 0.4 | 0.2 | Secondary particles | Non-aggregated particles | None | 70% |
| B1 | 0.1 | 0.8 | Secondary particles | Non-aggregated particles | 450cyc | 55% |
| B2 | 0.2 | 0.6 | Non-aggregated particles | Secondary particles | 300cyc | 40% |

As shown in Table 1, all of the batteries of Examples have high capacity retention in the above cycle test compared with the batteries of Comparative Examples, and have excellent cycle characteristics. The batteries of Comparative Examples caused drastic deterioration of a large degree of decrease in the capacity within the 500 cycles, but no drastic deterioration was observed with the batteries of Examples. It is understood from this result that the drastic decrease in the capacity with charge and discharge can be inhibited and therefore the cycle characteristics can be effectively improved by disposing the non-aggregated particles of the lithium-containing transition metal composite oxide in the center in the width direction of the positive electrode mixture layer and by disposing the secondary particles formed by aggregation of many primary particles on both sides in the width direction.

In particular, the battery of Example 1 yielded high capacity retention. In the battery of Example 2, a large number of the secondary particles having a large degree of deterioration with charge and discharge compared with the non-aggregated particles were used, and thereby it is considered that the capacity retention was rather lower than that of the battery of Example 1. With the batteries of Comparative Examples, it was considered that the discharge depth of the negative electrode became large at a position opposite to both the ends in the width direction of the positive electrode mixture layer, and thereby the drastic deterioration occurred within the 500 cycles.

### REFERENCE SIGNS LIST

10 Non-aqueous electrolyte secondary battery, 11 Positive electrode, 12 Negative electrode, 13 Separator, 14 Electrode assembly, 16 Exterior housing can, 17 Sealing assembly, 18, 19 Insulating plate, 20 Positive electrode lead, 21 Negative electrode lead, 22 Grooved portion, 23 Internal terminal plate, 24 Lower vent member, 25 Insulating member, 26 Upper vent member, 27 Cap, 28 Gasket, 30 Positive electrode core, 31 Positive electrode mixture layer, 31a First region, 31b Second region

## Claims

1. A non-aqueous electrolyte secondary battery, comprising a wound electrode assembly having: a positive electrode containing a lithium-containing transition metal composite oxide as a positive electrode active material; a negative electrode containing a silicon material as a negative electrode active material; and a separator, the positive electrode and the negative electrode being wound with the separator interposed therebetween, wherein
the positive electrode includes a mixture layer containing, as the lithium-containing transition metal composite oxide, first composite oxide particles that are non-aggregated particles having a median diameter on a volumetric basis of greater than or equal to 2 µm and less than or equal to 20 µm, and second composite oxide particles that are secondary particles formed by aggregation of primary particles having an average particle diameter of greater than or equal to 50 nm and less than or equal to 5 µm,
the mixture layer has: first regions being regions with a length range of greater than 10% of an entire width of the mixture layer along a width direction of the positive electrode from both ends in a width direction of the mixture layer; and a second region being a region sandwiched by the first regions,
the first regions contain a larger amount of the second composite oxide particles than the first composite oxide particles, and
the second region contains a larger amount of the first composite oxide particles than the second composite oxide particles.

2. The non-aqueous electrolyte secondary battery according to claim 1, wherein a mass ratio between the first composite oxide particles and the second composite oxide particles in the first region is from 20:80 to 0:100.

3. The non-aqueous electrolyte secondary battery according to claim 1 or 2, wherein a width of each of the first regions is greater than or equal to 20% and less than or equal to 40% of the entire width of the mixture layer.

4. The non-aqueous electrolyte secondary battery according to any one of claims 1 to 3, wherein a mass ratio between the first composite oxide particles and the second composite oxide particles in the second region is from 80:20 to 100:0.
